# EUROPÄISCHE PATENTANMELDUNG

(11) **EP 2 113 359 A1**
(43) Veröffentlichungstag der Anmeldung: **04.11.2009**
(21) Anmeldenummer: 09159132.1
(22) Anmeldetag: 29.04.2009
(51) Int. Cl.: B29C 45/16, B29C 45/26

(54) **Werkzeug für Spritzgussmaschinen**

(30) Priorität: 29.04.2008 DE 102008021433
(71) Anmelder: Gealan Formteile GmbH, 95145 Oberkotzau (DE)
(72) Erfinder: Sommerer, Gerd, 95168 Marktleuthen (DE); Laubmann, Gerhard, 95119 Naila (DE); von der Grün, Jörg, 95111 Rehau (DE)
(74) Vertreter: Fleuchaus, Michael A.

(57) **Zusammenfassung**

Die Erfindung betrifft ein Werkzeug für Spritzgußmaschinen, aufweisend einen auswerferseitigen Werkzeugaufbau (20), wobei der auswerferseitige Werkzeugaufbau (20) an seiner zur Düsenseite weisenden Oberfläche wenigstens eine Oberflächenkontur aufweist die so ausgeführt ist, daß sie bei geschlossenem Werkzeug zur Ausbildung einer Formteilkavität (50) beiträgt, und wobei diese Formteilkavität (50) in wenigstens einem Spritzgang mit Kunststoffschmelze ausspritzbar ist, um hierdurch ein Kunststofformteil (1) herzustellen. Erfindungsgemäß ist der auswerferseitige Werkzeugaufbau (20) im Bereich der Formteilkavität (50) mit wenigstens eine Durchführung (51) versehen, die in einen Freiraum für Antriebselemente (24) des auswerferseitigen Werkzeugaufbaus führt, und es sind mehrere Formteilkavitätseinsätze (43, 44) mit verschiedenen Oberflächenkonturen vorgesehen, wobei die Formteilkavitätseinsätze (43, 44) so ausgeführt sind, daß wenigstens jeweils ein Formteilkavitätseinsatz (43, 44) durch die Durchführung (51) hindurch in den Innenbereich des Werkzeugs einschiebbar ist, und bei eingeschobenem Formteilkavitätseinsatz dessen Oberflächenkontur Bestandteil der die Formteilkavität (50) bildenden Oberflächenkontur des auswerferseitigen Werkzeugaufbaus (20) wird. Das Erfindungsgemäße Werkzeug ermöglicht ein Wechseln von Formteilkavitätseinsätzen (43, 44) bei geschlossenem Werkzeug.

## Beschreibung

Die vorliegende Erfindung betrifft Werkzeuge für Spritzgußmaschinen. Insbesondere betrifft die vorliegende Erfindung ein Werkzeug, welches zum Einsatz in einer Spritzgußmaschine vorgesehen ist, und welches bevorzugt beim Mehrkomponentenspritzguß zum Einsatz kommt.

Werkzeuge für Spritzgußmaschinen sind im Stand der Technik hinreichend bekannt. Solche Werkzeuge bestehen üblicherweise aus wenigstens einem düsenseitigen Werkzeugaufbau sowie wenigstens einem auswerferseitigen bzw. aufspannseitigen Werkzeugaufbau.

Beim Einkomponentenspritzgußprozess werden diesen beiden Werkzeugteile gegeneinander gefahren und gehalten und Kunststoffschmelze aus wenigstens einem düsenseitig angeschlossenen Spritzgußagregat in die im Bereich der Anlagefläche der beiden Werkzeugteile angeordnete wenigstens eine Formteilkavität unter hohem Druck eingespritzt. Nach dem Erstarren der Kunststoffschmelze innerhalb der Formteilkavität wird der auswerferseitiger Werkzeugaufbau vom Düsenseitigen Werkzeugaufbau weg gefahren und das Kunststoffteil entnommen (entformt). Hiernach kann der Prozeß von neuem beginnen.

Beim Mehrkomponentenspritzguß werden beispielsweise Hart- und Weichkomponenten desselben Kunststoffteils innerhalb eines Spritzgußwerkzeugs gespritzt. Hierzu ist es erforderlich, daß bei jedem Spritzgang unterschiedlich ausgeformte Formteilkavitäten befüllt werden, wobei zwischen den Spritzgängen jeweils eine Vergrößerung der Formteilkavität in Bezug auf das im vorhergehenden Spritzgang hergestellte Kunststoffteil erfolgt.

Diese Veränderung der Geometrie der Formteilkavität bezüglich des Kunststoffteils kann auf unterschiedliche Weise erreicht werden.

Bei einem ersten Verfahren, dem sogenannten Umsetzen, sind beispielsweise im Bereich der Anlagefläche der beiden Werkzeugteile mehrere Formteilkavitäten unterschiedlicher Geometrie angeordnet. Nach dem Einspritzen der Kunststoffschmelze (erste Komponente) in eine erste Formteilkavität und deren Erstarren wird das Werkzeug wie beim Einkomponentenspritzgußprozess geöffnet und das Kunststoffteil entformt. Im Unterschied zum Einkomponentenspritzgußprozess wird das Kunststoffteil dann aber unmittelbar in die jeweils nächstgrößere, zweite Formteilkavität desselben Werkzeugs oder eines weiteren Werkzeugs wiedereingesetzt und das Werkzeug erneut zugefahren. Es erfolgt er zweite Spritzgang mit der zweiten Komponente, welche den zwischen Kunststoffteil und zweiter Formteilkavität bestehenden Raum befüllt. Durch erneutes Umsetzen/Spritzen können gegebenenfalls weitere Komponenten verarbeitet werden. Schließlich wird das fertige Kunststoffteil entnommen.

Bei einem zweiten Verfahren, dem sogenannten Sperrschieberprinzip, erfolgt nach dem Erstarren der jeweiligen Komponente kein öffnen des Werkzeugs und Umsetzen des Kunststoffteils in eine weitere Formteilkavität im gleichen oder einem weiteren Werkzeug, sondern im Werkzeug werden sogenannte Sperrschieber von einer ersten Position in eine zweite Position zurück gezogen, das heißt daß Teile der die Formteilkavität begrenzenden Wandungen in ihrer Lage bezüglich des Kunststoffteils so verändert werden, daß zwischen Kunststoffteil und zweiter Position des Sperrschiebers ein Hohlraum entsteht, der dann mit der zweiten Komponente ausgespritzt wird.

Beide vorstehend beschriebenen Mehrkomponentenspritzgußverfahren weisen dabei unter Anderem die nachstehenden Nachteile auf.

Im Falle des Umsetzens ist es von großem Nachteil für die Prozeßdauer und damit auch die Prozeßökonomie, daß das Werkzeug zwischen den Spritzgängen geöffnet, und das Kunststoffteil umgesetzt werden muß. Hierdurch verlängert sich der Herstellungsprozeß des Kunststoffteils erheblich, was letztlich zu einer verringerten Produktivität führt. Darüber hinaus addieren sich durch die Bereitstellung von zwei, drei oder mehr Formteilkavitäten, die in jedem Spritzgang ausgespritzt werden, die im Werkzeug entstehenden Auftriebskräfte, so daß nicht nur aus Gründen der Werkzeugabmessungen die Verwendung größerer Spritzgußmaschinen erforderlich wird sondern auch, um den höheren Auftriebskräften durch entsprechend höhere Zuhaltekräfte zu begegnen.

Wesentliche Nachteile des Sperrschieberprinzips sind, daß insbesondere im Falle schräg zur Maschinenachse verlaufender Sperrschieber die Werkzeuggeometrien im Verhältnis zur Größe der Formteilkavität groß werden, was wiederum die Notwendigkeit der Verwendung großer Spritzgußmaschinen zur Folge hat. Desweiteren ist die Geometrie jedes Sperrschiebers im Bereich der die Formteilkavität begrenzenden Wandungen fest und zudem die Bewegungsrichtung linear, was zur Folge hat, daß die Außenkontur sowohl der ersten als auch der zweiten und gegebenenfalls auch jeder weiteren Komponente des Kunststoffteils immer gleich verläuft. Außerdem entstehen in bestimmten Fällen unterschiedliche Materialstärken der zweiten oder jeder weiteren Komponente, was je nach Anwendung unerwünscht ist. Sperrschieberwerkzeuge schränken überdies die Konstruktionsfreiheit bei der Formteilentwicklung stark ein.

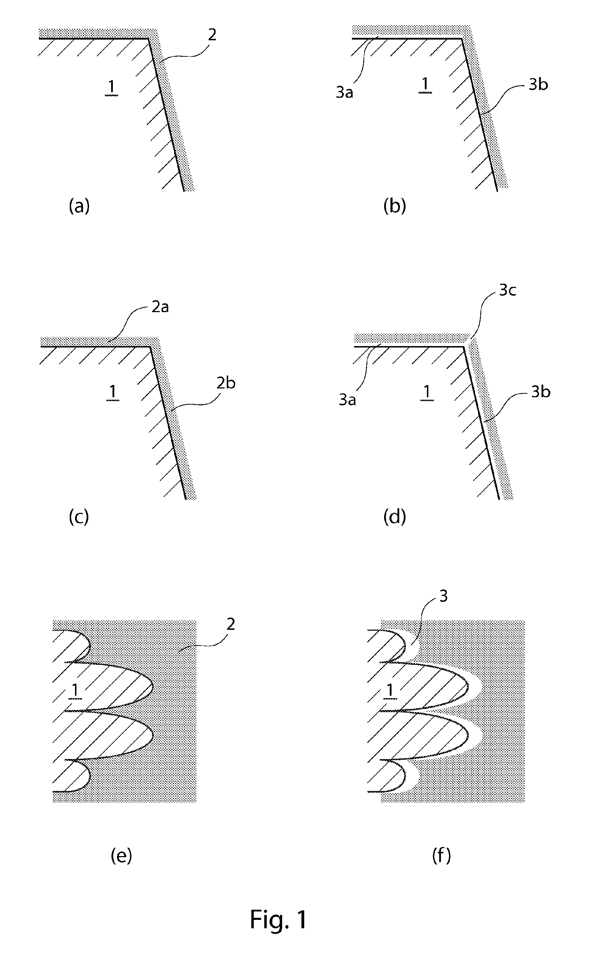

Sowohl der Nachteil der gleich verlaufenden Außenkontur der Komponenten des Kunststoffteils als auch das Problem der unterschiedlichen Materialstärken der zweiten oder weiteren Komponenten werden in Fig. 1, die nachfolgend kurz beschrieben wird, verdeutlicht.

Die Figuren 1 (a), (c) und (e) zeigen jeweils schematisch Teilansichten von Wandungen 2 unterschiedlicher Formteilkavitäten in Werkzeugen und der in die Werkzeuge eingespritzten ersten Kunststoffkomponenten 1. Erkennbar füllen die ersten Kunststoffkomponenten 1 die durch die Wandungen 2 der Formteilkavitäten begrenzten Räume. Nach dem Erstarren der ersten Kunststoffkomponenten 1 zeigen die Figuren 1 (b), (d) und (f) unterschiedliche Varianten, wie Bewegungen von die Wandungen 2 der Formteilkavitäten begrenzenden Sperrschiebern aussehen könnten.

Im Falle der Fig. 1 (b) ist die gesamte Wandung 2 des gezeigten Ausschnitts der Formteilkavität durch einen einzigen Sperrschieber gebildet. Erfolgt ein Ausrücken des Sperrschiebers in der Zeichenebene nach oben hat dies zur Folge, daß, wie dargestellt, unterschiedlich breite Spalte 3a, 3b zwischen dem Kunststoffteil 1 und der durch den Sperrschieber gebildeten Wandung 2 entstehen. Das führt dazu, daß im Bereich des Spalts 3a, dessen Lage im wesentlichen orthogonal zur Bewegungsrichtung des Sperrschiebers ist, die Wandstärke der zweiten Komponente größer ist, als im Bereich des Spalts 3b, dessen Lage zur Bewegungsrichtung des Sperrschiebers hin geneigt ist.

Im Falle der Fig. 1 (d) erfolgt, als Versuch zur Lösung des vorstehenden Problems, eine Bewegung der die Formteilkavität begrenzenden Wandungen 2a, 2b in 2 Richtungen, also mit zwei Sperrschiebern, die jeweils normal zur Oberfläche des Kunststoffteils 1 bewegt werden. Wie sich zeigt wird hierdurch zwar das Problem unterschiedlicher Spaltbreiten 3a und 3b behoben, allerdings entsteht durch die relative Bewegung der Sperrschieber zueinander ein unerwünschter Spalt 3c zwischen den beiden Sperrschiebern, der, sofern überhaupt möglich, nur mit sehr großem Aufwand gedichtet werden könnte.

Im Falle der Fig. 1 (f) ist eine komplexere Oberflächenform des Kunststoffteils 1 gezeigt, wie sie jedoch bei Kunststoffteilen häufig vorkommt. Wird die als Sperrschieber ausgebildete Wandung 2 der Formteilkavität in der Zeichenebene nach rechts ausgerückt, so entsteht zwischen dem Kunststoffteil 1 und der Wandung 2 ein Spalt 3 mit sehr unterschiedlichen Breiten, was zur Folge hat, daß die Materialstärke der zweiten Komponente in diesem Bereich stark variiert. Eine Kompensation ist im Falle derartig komplexer Formteilgeometrien mechanisch nicht zu bewerkstelligen.

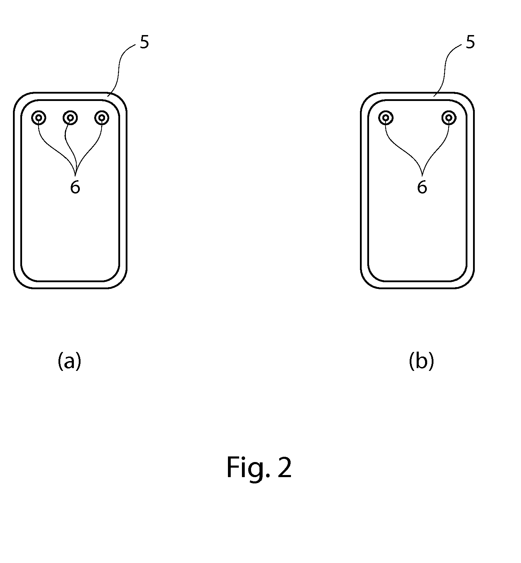

Als weiterer Nachteil bekannter Spritzgußwerkzeuge zeigt sich, daß im Laufe der Entwicklung und Herstellung von Ein- und Mehrkomponentenspritzgußteilen die Kunststoffteilgeometrie aufgrund äußerer Einflüsse verändert werden muß und Elemente, wie z.B. Stege, Überstände oder dergleichen am Kunststoffteil entweder versetzt oder aber entfernt werden müssen. Beispielhaft sei auf die Darstellung in Fig. 2 (a) verwiesen, bei welcher in einem ersten Bauteil aus einer ersten Komponente 5 drei Dichtringe aus einer zweiten Komponente 6 angespritzt sind.

Soll nun im Laufe der Entwicklung auf einen der Dichtringe verzichtet werden, vgl. Fig. 2 (b), so ist diese Anpassung mit einer aufwendigen Überarbeitung des Spritzgußwerkzeugs verbunden, dessen Formteilkavität sowohl für die zweite als auch gegebenenfalls für die erste Komponente verändert werden muß. Da die Herstellung und Bearbeitung von Spritzgußwerkzeugen im Allgemeinen sehr aufwendig ist sind mit solchen Änderungen der Kunststoffteilgeometrie häufig hohe Kosten und lange Stillstandszeiten verbunden.

Ganz allgemein erfordern Werkzeuge für den Mehrkomponentenspritzguß gemäß dem Stand der Technik schießlicht häufig maschinenseitig besondere Antriebe bzw. Aggregate, beispielsweise für das Umsetzen von Kunststoffteilen oder das Bewegen von Sperrschiebern, was zu Kompatibilitätsproblemen zwischen einem Werkzeug und Spritzgußmaschinen unterschiedlicher Hersteller führen kann.

Aufgabe der vorliegenden Erfindung ist es daher, die in Verbindung mit der Verwendung von Werkzeugen für Spritzgußmaschinen gemäß dem Stand der Technik auftretenden Probleme zu vereinfachen und insbesondere ein Werkzeug für Spritzgußmaschinen zur Verfügung zu stellen, daß eine vereinfachte Herstellung von Mehrkomponenten-Spritzgußteilen unter zumindest teilweiser Überwindung der vorstehenden Nachteile erlaubt.

Diese und weitere Aufgaben werden durch ein Werkzeug für Spritzgußmaschinen gemäß dem unabhängigen Anspruch 1 gelöst. Besonders bevorzugte Attsführungsformen von Werkzeugen für Spritzgußmaschinen gemäß der vorliegenden Erfindung sind Gegenstand der Unteransprüche.

Demnach weist ein erfindungsgemäßes Werkzeug für Spritzgußmaschinen einen auswerfer- bzw. aufspannseitigen Werkzeugaufbau auf, der an seiner zur Düsenseite weisenden Oberfläche wenigstens eine Oberflächenkontur aufweist die so ausgeführt ist, daß sie bei geschlossenem Werkzeug zur Ausbildung einer Formteilkavität beiträgt, und wobei diese Formteilkavität in wenigstens einem Spritzgang mit Kunststoffschmelze ausspritzbar ist, um hierdurch ein Kunststoffformteil herzustellen. Der auswerferseitige Werkzeugaufbau weist im Bereich der Formteilkavität wenigstens eine Durchführung auf, die in einen Freiraum für Antriebselemente des auswerferseitigen Werkzeugaufbaus führt. Vorzugsweise in dem Freiraum für Antriebselemente sind mehrere Formteilkavitätseinsätze mit verschiedenen Oberflächenkonturen vorgesehen, wobei die Formteilkavitätseinsätze so ausgeführt sind, daß wenigstens jeweils ein Formteilkavitätseinsatz durch die Durchführung hindurch in den Innenbereich des Werkzeugs einschiebbar ist, und hierdurch dessen Oberflächenkontur Bestandteil der die Formteilkavität bildenden Oberflächenkontur des auswerferseitigen Werkzeugaufbaus wird.

Das bedeutet, daß der bzw. die Formteilkavitätseinsätze, wenn Sie in den auswerferseitigen Werkzeugaufbau eingeschoben sind die Durchführung zumindest im Bereich der Formteilkavität im wesentlichen Dicht verschließen, so daß beim ausspritzen der Formteilkavität nahezu keine Kunststoffschmelze durch die Durchführung aus der Formteilkavität entweichen kann. Durch die Formteilkavitätseinsätze weist ein Teilbereich der Formteilkavität eine, je nach eingeschobenem Formteilkavitätseinsatz, unterschiedliche Oberflächenkontur auf, wobei insbesondere im Falle des Mehrkomponentenspitzgußprozesses mit jedem Einsetzen eines Formteilkavitätseinsatzes das Gesamtvolumen der Formteilkavität verändert und vorzugsweise vergrößert wird, auch wenn dieses gegebenenfalls schon teilweise von einem in einem vorhergehenden Spritzgang hergestellten Formteil befüllt ist.

Die erfindungsgemäße Verwendung von Formteilkavitätseinsätzen führt dazu, daß im Gegensatz zum Sperrschieberprinzip, die äußere Geometrie wie auch die Materialstärke jeder einzelnen Kunststoffkomponente eines Mehrkomponenten-Formteils auch im Falle komplizierter Formteilgeometrien individuell gestaltbar ist und nicht durch die Geometrie des Sperrschiebers für alle Komponenten gleichermaßen festgelegt ist. Dennoch erlaubt es die Erfindung, die Formteilkavität flexibel und nach den Wünschen den Konstrukteurs zu verändern, ohne daß ein Umsetzen des Formteils in eine weitere Formteilkavität nötig wäre. Die Geometrie der Formteilkavität kann also verändert werden noch während sich das Kunststoffteil in der Formteilkavität befindet.

Bei einer bevorzugten Ausführungsform ist zwischen verschiedenen Spritzgängen ein automatischer Wechsel wenigstens eines Formteilkavitätseinsatzes durchführbar, so daß hierdurch wiederum eine geometrische Veränderung der Oberflächenkontur der Formteilkavität erzielt wird und daraus eine Veränderung der Geometrie der Formteilkavität resultiert. Der Automatische Wechsel erlaubt dabei ein sehr schnelles auswechseln der Formteilkavitätseinsätze und damit eine weitere Verkürzung der Verarbeitungszeit, insbesondere zwischen verschiedenen Spritzgängen eines Mehrkomponentenspritzgußverfahrens.

Besonders bevorzugt ist das Ausrücken, Selektieren und/oder Einschieben wenigstens eines Formteilkavitätseinsatzes dabei durch eine Rechnereinrichtung gesteuert, so daß bedarfsweise jeder Spritzgang mit einer vom jeweils vorherigen Spritzgang geometrisch verschiedenen Formteilkavität erfolgt.

Vorzugsweise erfolgt der Wechsel wenigstens eines Formteilkavitätseinsatzes durch ein im wesentlichen lineares Ausrücken des Formteilkavitätseinsatzes entlang der Durchführung, das Selektieren eines anderen Formteilkavitätseinsatzes und das im wesentlichen lineare Einschieben des anderen Formteilkavitätseinsatzes wiederum entlang der Durchführung. Besonders bevorzugt ist die Durchführung parallel zur Maschinenachse verlaufend angeordnet, d. h. parallel zur Verschiebeachse des auswerferseitigen Werkzeugaufbaus beim Öffnen bzw. Schließen des Werkzeugs.

Bei einer bevorzugten Ausführungsform der vorliegenden Erfindung sind die Formteilkavitätseinsätze an einem Stützelement angeordnet. Insbesondere ist hierunter zu verstehen, daß die Formteilkavitätseinsätze als gesonderte Bauteile, vorzugsweise lösbar mit dem Stützelement verbunden sind, so daß auch ein nachträgliches Wechseln der verwendeten Formteilkavitätseinsätze möglich ist. Der Formteilkavitätseinsatz oder aber die Formteilkavitätseinsätze können aber auch einstückig mit dem Stützelement verbunden sein, so daß beispielsweise Formteilkavitätseinsätze im Bereich der beiden Enden eines stabförmigen Stützelementes vorgesehen sind.

Darüber hinaus können bei bevorzugten Weiterbildungen der Erfindung die Stützelemente U-, T- oder V-förmig, quadratisch, würfelförmig oder anderweitig polygonförmig ausgebildet sein, wobei, beispielsweise im Falle eines würfelförmigen Stützelementes, die Anordnung von Formteilkavitätseinsätzen an zumindest den vier Seitenflächen des würfelförmigen Stützelementes möglich ist. In einem solchen Fall sind somit vier unterschiedliche Formteilkavitätseinsätze in einem erfindungsgemäßen Werkzeug vorgesehen, so daß beispielsweise drei unterschiedlich ausgebildete Varianten eines Zweikomponenten-Formteils mit ein und demselben Werkzeug hergestellt werden können, in dem je nach benötigter Variante beim Spritzgang der zweiten Komponente der entsprechende Formteilkavitätseinsatz gewählt und eingeschoben wird.

Besonders bevorzugt ist das Stützelement und die hieran angeordneten Formteilkavitätseinsätze dabei im wesentlichen symmetrisch zu einer Hauptsymmetrieachse ausgebildet - mit Ausnahme der Oberflächenkonturen der Formteilkavitätseinsätze, die in keiner Weise irgendwelche Symmetrien aufzuweisen brauchen - so daß zum Selektieren eines Formteilkavitätseinsatzes das Stützelement um diese Hauptsymmetrieachse rotiert wird, bis der gewählte Formteilkavitätseinsatz in Richtung der Formteilkavität weist und durch ein Einschieben in das Werkzeug , vorzugsweise durch eine Translationsbewegung des Stützelements entlang einer im wesentlichen parallel zur Maschinenachse verlaufenden Achse, dessen Oberflächenkontur Bestandteil der die Formteilkavität bildenden Oberflächenkontur wird.

Besonders bevorzugt ist das Ausrücken, Selektieren und/oder Einschieben wenigstens eines Formteilkavitätseinsatzes eines erfindungsgemäßen Werkzeugs bei geschlossenem Werkzeug durchführbar. Dies erlaubt es, ohne Veränderung der Position des Kunststoffteils in Bezug auf das Werkzeug, die Geometrie der Formteilkavität zu ändern, insbesondere zu vergrößern, ohne dabei den durch die Verwendung von Sperrschiebern bedingten Beschränkungen zu unterliegen.

Besonders Vorteilhaft ist bei der Verwendung von erfindungsgemäßen Werkzeugen im Rahmen von Mehrkomponentenspritzgußprozessen wenn die Oberflächenkonturen der Formteilkavitätseinsätze jeweils die Formteilgeometrien der aufeinander folgenden Spritzgänge des Mehrkomponentenspritzgußprozesses begrenzen. Dies bedeutet, daß beispielsweise das Spritzen der ersten Komponente unter Verwendung eines ersten Formteilkavitätseinsatzes erfolgt, hiernach der Formteilkavitätseinsatz ausgewechselt wird, wodurch die zu befüllende Kavität für den zweiten Spritzgang zwischen Kunststoffteil und Oberflächenkontur des zweiten Formteilkavitätseinsatzes gebildet wird. Nach dem ausspritzen dieser Kavität für die zweite Komponente kann dann das fertige Kunststoffteil entformt werden.

Bei einer bevorzugten Ausführungsform des erfindungsgemäßen Werkzeugs weist der auswerferseitige Werkzeugaufbau eine Aufspannplatte auf und eine hierzu parallel angeordnete Formteilplatte in welcher zumindest ein Teil der die Formteilkavität bildenden auswerferseitige Oberflächenkontur ausgebildet ist. Die Aufspannplatte und Formteilplatte sind dabei bevorzugt durch wenigstens ein Distanzelement voneinander beabstandet und zueinander fest gehalten. Hierdurch wird durch Aufspann- und Formteilplatte der Freiraum für Antriebselemente zwischen der Aufspannplatte und der Formteilplatte gebildet.

Darüber hinaus kann bei anderen Ausführungsformen der vorliegenden Erfindung der Freiraum für Antriebselemente auch in Form eines im Werkzeug ausgebildeten Hohlraums ausgeführt sein oder aber außerhalb des Werkzeugs, also zum Beispiel seitlich hiervon angeordnet sein.

Der Freiraum für Antriebselemente erlaubt es auch bei bevorzugten Ausführungsformen der Erfindung Rotations- und/oder Linearverschiebungsaggregate aufzunehmen, durch die der Antrieb, also die Bewegung der Formteilkavitätseinsätze beim Ausrücken, Selektieren und/oder Einschieben derselben erfolgt. Dies erlaubt es, das erfindungsgemäße Werkzeug mit einer Vielzahl von verschiedenen Spritzgußmaschinen zu verwenden, da die für den Spritzguß erforderlichen Aggregate innerhalb des Werkzeugs angeordnet sind und keine Antriebe in Form von Verschiebe- oder Drehantrieben in das Werkzeuginnere übersetzt werden müssen. Lediglich die Zuführung von Steuerleitungen und gegebenenfalls Energieversorgungsleitungen in den die Antriebselemente aufnehmenden Freiraum muß gewährleistet sein. Erfindungsgemäße Werkzeuge sind daher kompatible zu einer Vielzahl von Spritzgußmaschinen ohne daß am Werkzeug oder an der jeweiligen Spritzgußmaschine wesentliche bauliche Veränderungen vorgenommen werden müßten.

Die Verwendung von erfindungsgemäßen Werkzeugen mit Formteilkavitätseinsätzen erlaubt es auch bei geschlossenem Werkzeug, die Formteilkavität zu verändern, insbesondere zu vergrößern und hierdurch Raum zum Ausspritzen einer zweiten oder weiteren Komponente innerhalb der Formteilkavität zu schaffen. Dadurch wird ein Öffnen des Werkzeugs zwischen den Spritzgängen vermieden, gleichzeitig jedoch die volle Flexibilität der äußeren Geometrie und der Materialstärke jeder einzelnen Kunststoffkomponente beibehalten.

Gegenüber dem Mehrkomponentenspritzguß mittels Umsetzen des Formteils bietet das erfindungsgemäße Werkzeug zudem den Vorteil, daß die Zuhaltekraft der verwendeten Maschine von der geometrisch größten zu spritzenden Komponente abhängt, aufgrund der beim Spritzen dieser Komponente entstehenden Auftriebskräfte, und nicht durch die notwendige Bereitstellung mehrerer Formteilkavitäten in demselben Werkzeug erhöht wird. Das heißt, daß mit dem erfindungsgemäßen Werkzeug Mehrkomponenten-Formteile mit vergleichsweise kleinen Spritzgußmaschinen hergestellt werden können.

Schließlich bietet die Verwendung erfindungsgemäßer Werkzeuge die Möglichkeit, Formteile mit teilweise unterschiedlichen Formteilgeometrien herzustellen, indem bei jedem Spritzgang der zu verwendende Formteilkavitätseinsatz individuell selektiert und gegebenenfalls eingeschoben wird. Hierdurch lassen sich bei der Herstellung und/oder Umarbeitung von Spritzgußwerkzeugen erheblich Kosten einsparen.

Weitere Merkmale der Erfindung ergeben sich aus der nachfolgenden detaillierten Beschreibung von Ausführungsbeispielen von erfindungsgemäßen Werkzeugen in Verbindung mit den Zeichnungen. Es zeigt:
- Fig. 1:: Eine schematische Veranschaulichung von Problemen bei der Verwendung des Sperrschieberprinzips;
- Fig. 2:: Entwicklungsvarianten eines Kunststoffteils, wie sie in verschiedenen Stadien der Produktentwicklung benötigt werden können;
- Fig. 3:: Eine schematische Schrägansicht eines Werkzeugs für Spritzgußmaschinen gemäß einem ersten Ausführungsbeispiel der Erfindung;
- Fig. 4:: Eine schematische Schrägansicht des auswerferseitigen Werkzeugaufbaus des Werkzeugs gemäß Fig. 3 mit einem eingeschobenen ersten Formteilkavitätseinsatz;
- Fig. 5:: Eine schematische Schrägansicht des auswerferseitigen Werkzeugaufbaus gemäß Fig. 4 mit einem ausgerückten Formteilkavitätseinsatz;
- Fig. 6:: Eine schematische Schrägansicht des auswerferseitigen Werkzeugaufbaus gemäß Fig. 4 mit einem eingeschobenen zweiten Formteilkavitätseinsatz;
- Fig. 7:: Eine Draufsicht auf die Formteilplatte eines auswerferseitigen Werkzeugaufbaus eines Werkzeugs gemäß der Erfindung;
- Fig. 8:: Eine Schnittansicht eines auswerferseitigen Werkzeugaufbaus eines Werkzeugs gemäß der Erfindung entlang der Linie AA' gemäß Fig. 7 mit einem eingeschobenen ersten Formteilkavitätseinsatz sowie eine schräge Ausschnittsansicht des ersten Formteilkavitätseinsatzes und des hiermit in einem ersten Spritzgang erzeugten Kunststoffteils;
- Fig. 9:: Eine Schnittansicht des auswerferseitigen Werkzeugaufbaus gemäß Fig. 8 mit einem ausgerückten ersten Formteilkavitätseinsatz sowie eine schräge Ausschnittsansicht des ersten Formteilkavitätseinsatzes und seiner Lage bezüglich des in einem ersten Spritzgang erzeugten Kunststoffteils;
- Fig. 10:: Eine Schnittansicht des auswerferseitigen Werkzeugaufbaus gemäß Fig. 9 mit rotiertem Stützelement sowie eine schräge Ausschnittsansicht des zweiten Formteilkavitätseinsatzes und seiner Lage bezüglich des in einem ersten Spritzgang erzeugten Kunststoffteils;
- Fig. 11:: Eine Schnittansicht des auswerferseitigen Werkzeugaufbaus gemäß Fig. 10 mit einem eingeschobenen zweiten Formteilkavitätseinsatz sowie eine schräge Ausschnittsansicht des zweiten Formteilkavitätseinsatzes und seiner Lage bezüglich des in einem ersten Spritzgang erzeugten Kunststoffteils nach dem Einschieben;
- Fig. 12:: Eine Schnittansicht eines auswerferseitigen Werkzeugaufbaus eines Werkzeugs gemäß einer weiteren Ausführungsform der Erfindung entlang der Linie AA' gemäß Fig. 7 mit einem eingeschobenen ersten Formteilkavitätseinsatz sowie eine schräge Ausschnittsansicht des ersten Formteilkavitätseinsatzes und des hiermit in einem ersten Spritzgang erzeugten Kunststoffteils;
- Fig. 13:: Eine Schnittansicht des auswerferseitigen Werkzeugaufbaus gemäß Fig. 12 mit einem ausgerückten ersten Formteilkavitätseinsatz sowie eine schräge Ausschnittsansicht des ersten Formteilkavitätseinsatzes und seiner Lage bezüglich des in einem ersten Spritzgang erzeugten Kunststoffteils;
- Fig. 14:: Eine Schnittansicht des auswerferseitigen Werkzeugaufbaus gemäß Fig. 13 mit rotiertem Stützelement sowie eine schräge Ausschnittsansicht des zweiten Formteilkavitätseinsatzes und seiner Lage bezüglich des in einem ersten Spritzgang erzeugten Kunststoffteils;
- Fig. 15:: Eine Schnittansicht des auswerferseitigen Werkzeugaufbaus gemäß Fig. 14 mit einem eingeschobenen zweiten Formteilkavitätseinsatz sowie eine schräge Ausschnittsansicht des zweiten Formteilkavitätseinsatzes und seiner Lage bezüglich des in einem ersten Spritzgang erzeugten Kunststoffteils nach dem Einschieben;

In der nachfolgenden detaillierten Beschreibung der Figuren sind jeweils gleichartige Komponenten von erfindungsgemäßen Werkzeugen für Spritzgußmaschinen mit gleichen Bezugszeichen versehen, sofern keine anderen Angaben gemacht werden.

Bezüglich der Figuren 1 und 2 wird auf die Beschreibungseinleitung und die dort gegebene detaillierte Beschreibung der gezeigten Verhältnisse verwiesen.

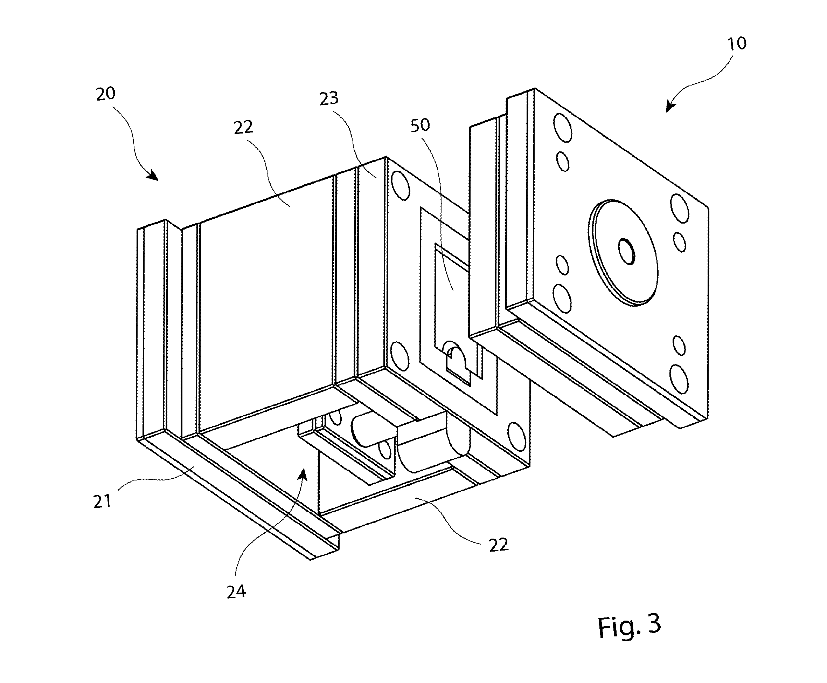

Fig. 3 zeigt ein Ausführungsbeispiel eines erfindungsgemäßen Werkzeugs, welches einen auswerferseitigen Werkzeugaufbau 20 und einen dazu korrespondierenden düsenseitigen Werkzeugaufbau 10 aufweist. Der auswerferseitige Werkzeugaufbau 20 weist an seiner zur Düsenseite weisenden Oberfläche wenigstens eine Oberflächenkontur auf, die so ausgeführt ist, daß sie bei geschlossenem Werkzeug zur Ausbildung einer Formteilkavität 50 beiträgt. Diese Formteilkavität 50 ist dazu vorgesehen, in wenigstens einem Spritzgang mit Kunststoffschmelze ausgespritzt zu werden und hierdurch ein Kunststofformteil herzustellen.

Der düsenseitige Werkzeugaufbau 10 weist einen Zentrierring auf, an welchem das Aggregat der Spritzgußmaschine angeschlossen wird.

Der auswerferseitige Werkzeugaufbau 20 umfaßt eine Aufspannplatte 21 und eine hierzu parallel angeordnete Formteilplatte 23 in welcher zumindest ein Teil der die Formteilkavität 50 bildenden auswerferseitigen Oberflächenkontur ausgebildet ist. Aufspannplatte 21 und Formteilplatte 23 sind durch zwei Distanzelemente 22 in der Form von randseitig senkrecht auf der Aufspannplatte stehenden Platten voneinander beabstandet und werden durch die Distanzelemente zueinander fest gehalten. Die Distanzelemente 22 sind so ausgelegt, daß sie gemeinsam die gesamte Zuhaltekraft der Spritzgußmaschine auf die Formteilplatte übertragen.

Zwischen Aufspannplatte 21 und Formteilplatte 23 sowie zwischen den beiden Distanzelementen 22 ist der Freiraum für Antriebselemente 24 gebildet, in welchem Antriebsaggregate, wie zum Beispiel Rotations- und/oder Linearverschiebungsaggregate für die Bewegung von Formteilkavitätseinsätzen 43, 44 aufgenommen sind.

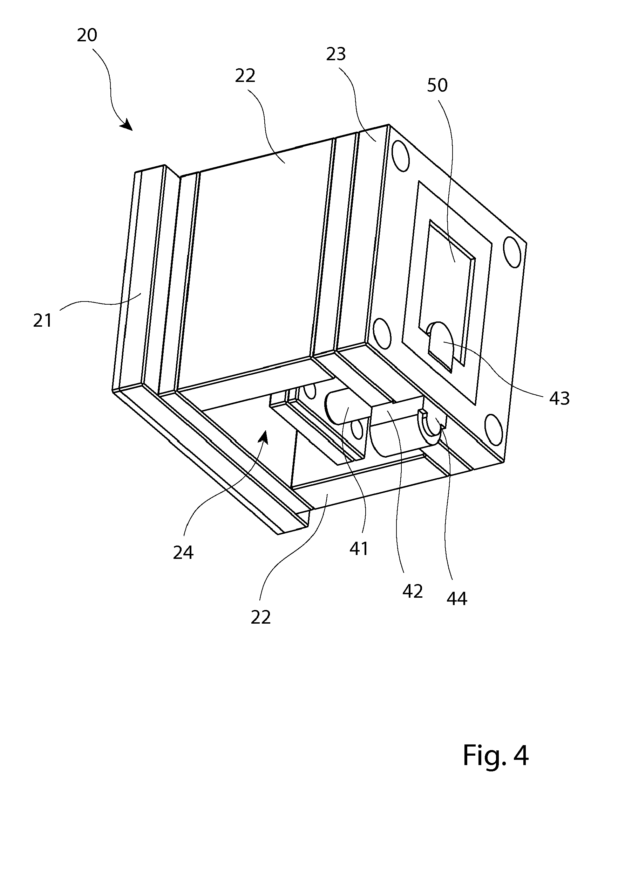

Fig. 4 zeigt einen auswerferseitige Werkzeugaufbau 20, welcher im wesentlichen dem in Fig. 3 gezeigten entspricht. Ein düsenseitiger Werkzeugaufbau 10 ist in den Figuren 4 bis 15 aus Gründen der vereinfachten Darstellbarkeit nicht gezeigt.

In Fig. 4 ist erkennbar, daß innerhalb des Freiraums für Antriebselemente 24 auch die einen ersten Formteilkavitätseinsatz 43 und einen zweiten Formteilkavitätseinsatz 44 tragende Mimik zumindest teilweise angeordnet ist. Demnach sind der erst und zweite Formteilkavitätseinsatz 43, 44 an den Schenkeln eines U-förmigen Stützelements 42 angeordnet, wobei diese Schenkel in Richtung des düsenseitigen Werkzeugaufbaus 10 zeigen und parallel zur Maschinenachse, das ist die Achse entlang derer der auswerferseitige Werkzeugaufbau beim Öffnen und Schließen der Maschine bewegt wird, orientiert sind.

Das Stützelement ist auf einem Rotationsaggregat 41 angeordnet, welches wiederum auf einer Tragplatte 40 befestigt ist. Die Rotationsachse des Rotationsaggregats ist vorzugsweise ebenfalls parallel zur Maschinenachse orientiert.

Der in Fig. 4 gezeigte Zustand, bei dem der erste Formteilkavitätseinsatz 43 in das Werkzeug eingeschoben ist erlaubt das Spritzen eines Kunststoffteils mit einer ersten Formteilgeometrie.

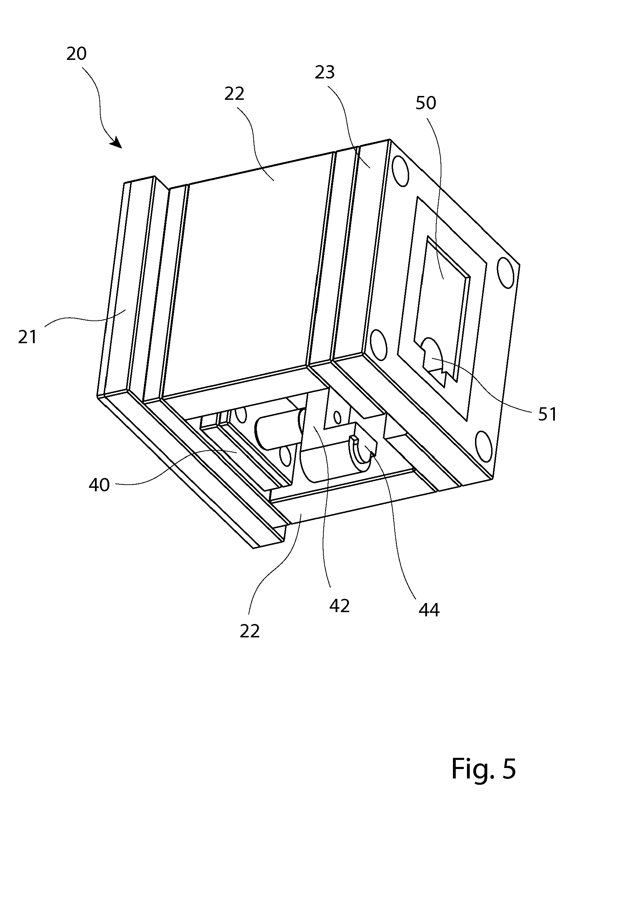

Fig. 5 zeigt den auswerferseitige Werkzeugaufbau 20 gemäß Fig. 4, wobei hier die gesamte die Formteilkavitätseinsätze 43, 44 tragende Mimik entlang einer im wesentlichen parallel zur Maschinenachse verlaufenden Achse zurückversetzt ist, so daß der erste Formteilkavitätseinsatz 43 aus dem Werkzeug ausgerückt ist und hierdurch die Durchführung 51 der Formteilkavität freigegeben ist. Der Linearantrieb der Tragplatte 40 erfolgt durch ein innerhalb oder außerhalb des Freiraum für Antriebselemente 24 angeordnetes Linearverschiebungsaggregat (nicht gezeigt).

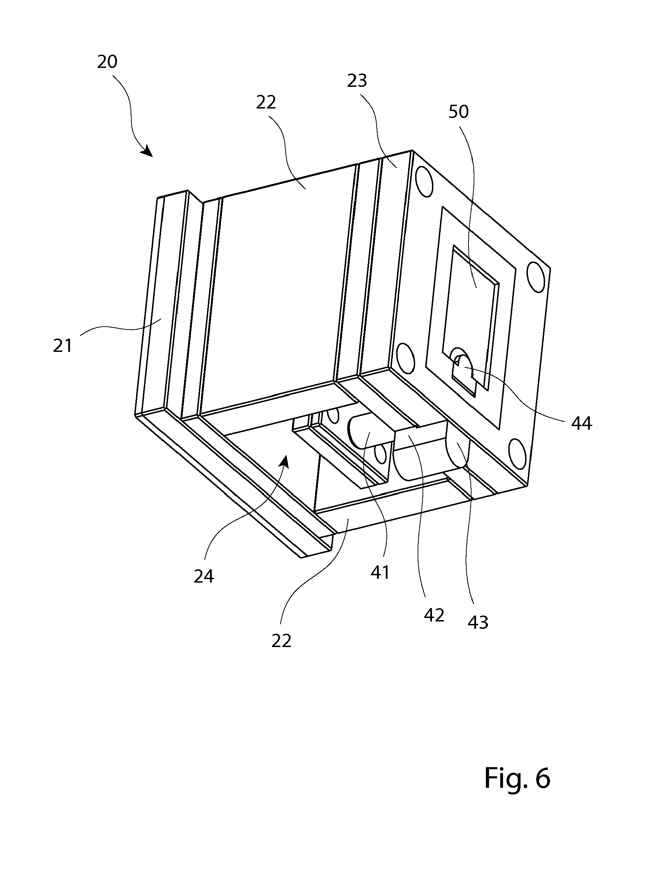

Fig. 6 zeigt den auswerferseitige Werkzeugaufbau 20 gemäß Fig. 5 nach einer Rotation des Stützelements 42 mittels des Rotationsaggregats 41 um 180° und einem nachfolgenden Einschieben des zweiten Formteilkavitätseinsatzes 44 in das Werkzeug, in dem die die Formteilkavitätseinsätze 43, 44 tragende Mimik diesmal in zur Ausrückrichtung entgegengesetzter Richtung durch das Linearverschiebungsaggregat verschoben wurde.

Der zweite Formteilkavitätseinsatz 44, verschließt in diesem Zustand die Durchführung 51 im Bereich der Formteilkavität 50 im wesentlichen Dicht, so daß beim ausspritzen der Formteilkavität 50 nahezu keine Kunststoffschmelze durch die Durchführung 51 aus der Formteilkavität 50 entweichen kann.

Der in Fig. 6 gezeigte Zustand, bei dem der zweite Formteilkavitätseinsatz 44 in das Werkzeug eingeschoben ist erlaubt das Spritzen eines Kunststoffteils mit einer zweiten Formteilgeometrie.

Der Prozeß des Ausrückens des ersten Formteilkavitätseinsatzes 43 durch das Zurückversetzen der tragenden Mimik, der Rotation des Stützelementes 42 mittels des Rotationsaggregats 41 und des Einschiebens des zweiten Formteilkavitätseinsatzes 44 durch das Vorschieben der tragenden Mimik kann dabei bei geschlossenem Werkzeug erfolgen.

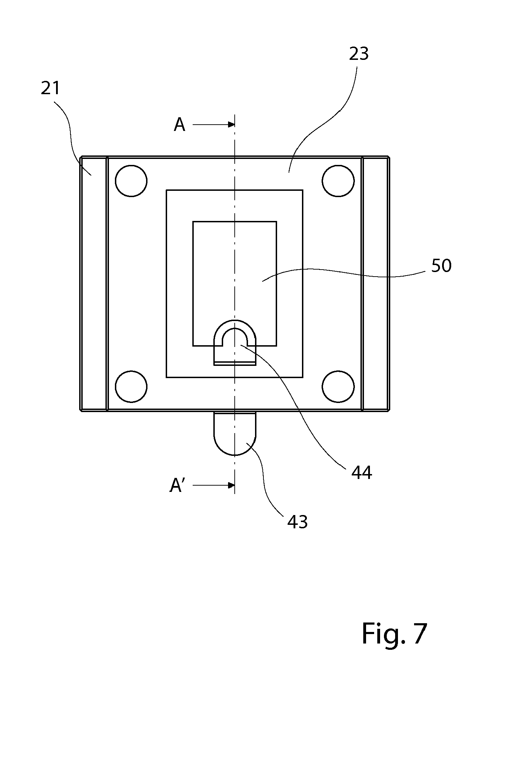

Fig. 7 zeigt eine Draufsicht auf die Formteilplatte 23 des auswerferseitigen Werkzeugaufbaus 20 des Werkzeugs gemäß der Erfindung, welches in Fig. 6 gezeigt ist. Es läßt sich dabei deutlich erkennen, daß die Außenwandungen des zweiten Formteilkavitätseinsatzes 44 an den Innenwandungen der Durchführung 51 im Bereich der Formteilkavität 50 vollflächig anliegen, so daß die Durchführung 51 im Bereich der Formteilkavität 50 gegenüber dem Freiraum für Antriebselemente 24 dicht verschlossen ist und beim Ausspritzen der Formteilkavität 50 keine Kunststoffschmelze in den Freiraum 24 eindringt.

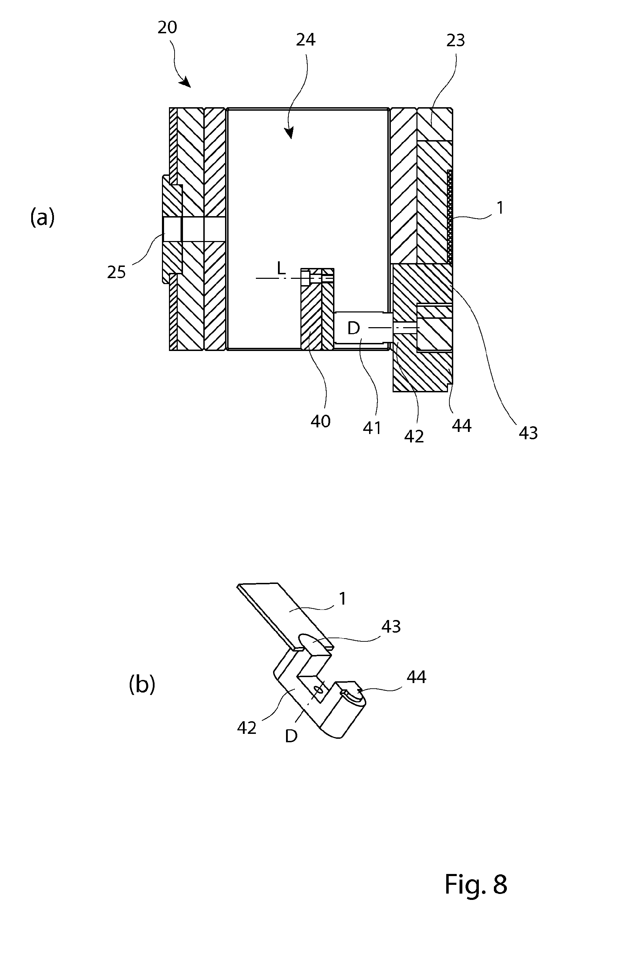

Die Figuren 8 bis 11 zeigen den in den Figuren 4 bis 6 beschriebenen Prozeß ein weiteres Mal im Detail. Dabei zeigen die Figuren 8(a) bis 11(a) jeweils den auswerferseitige Werkzeugaufbau 20 in einer Schnittansicht entlang der in Fig. 7 eingezeichneten Schnittlinie AA'. Die Figuren 8 (b) bis 11(b) zeigen eine Ausschnittsansicht der Formteilkavitätseinsätze 43, 44 und des Stützelementes 42 und deren Lage bezüglich des in einem ersten Spritzgang gespritzten Kunststoffteils 1.

In Fig. 8 (a) und (b) ist erkennbar, daß der erste Formteilkavitätseinsatz 43 eine Seitenwandung der Formteilkavität 50 begrenzt. Darüber hinaus sind in Fig. 8 die Drehachse D erkennbar, um welche das Stützelement mittels des Rotationsaggregats 41 drehbar ist, jedoch nur im ausgerückten Zustand. Zudem ist die Längsverschiebeachse L erkennbar, die in dieser Ausführungsform parallel zur Maschinenachse und zur Drehachse D orientiert ist. Die Tragplatte 40 wird beim Ausrücken der die Formteilkavitätseinsätze tragenden Mimik entlang der Längsverschiebeachse L zurückverschoben durch ein - nicht gezeigtes - Linearverschiebungsaggregat.

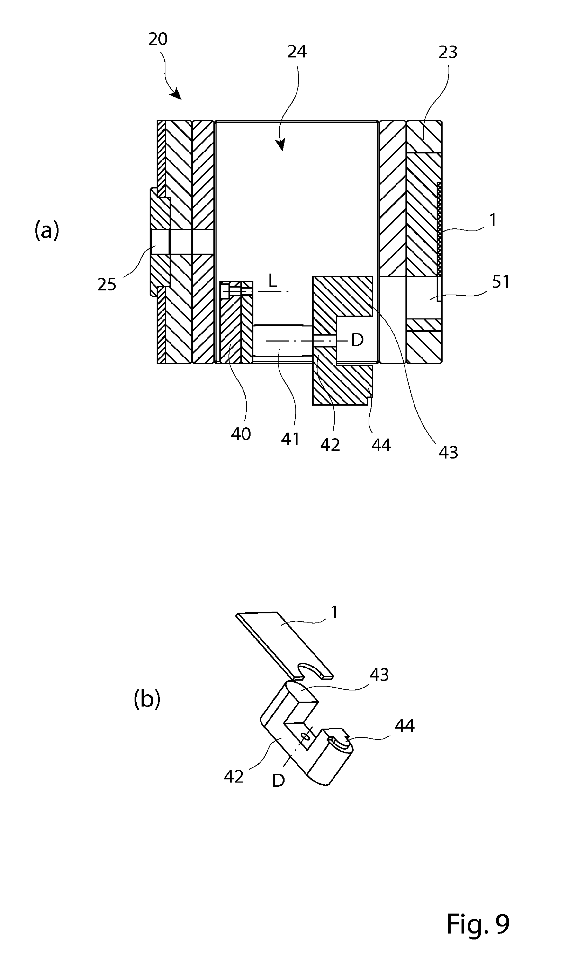

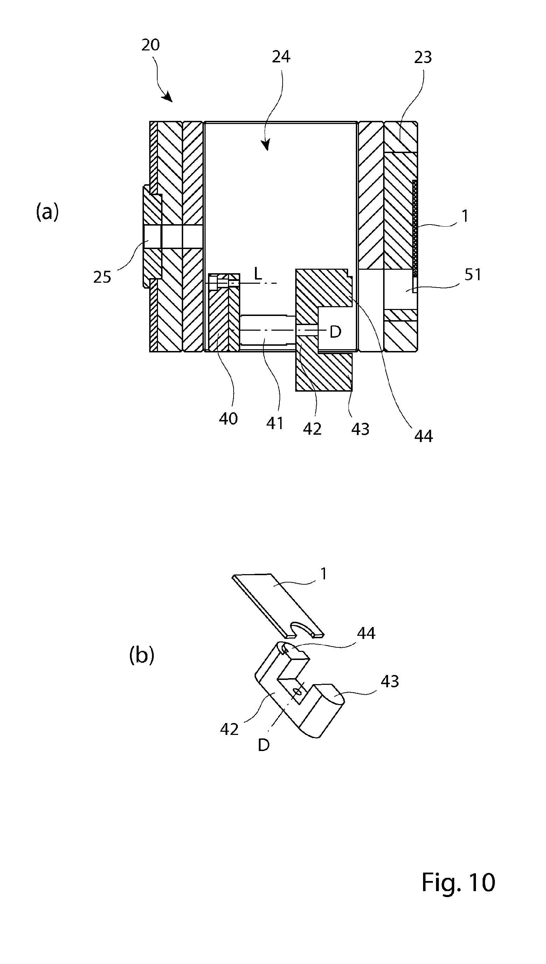

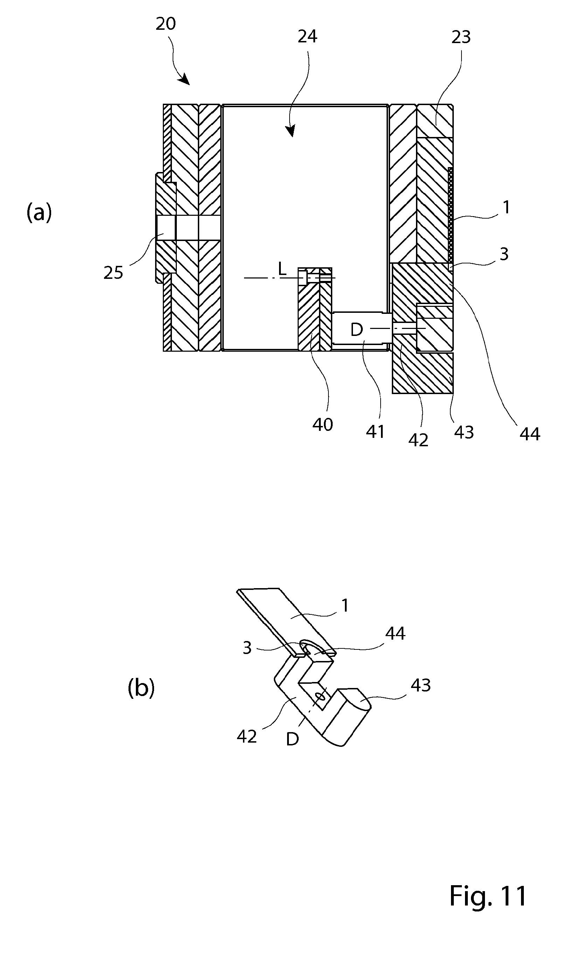

Hierdurch wird der in Fig. 9 gezeigte Zustand erreicht. In diesem Zustand erfolgt sodann durch das Rotationsaggregat 41 die Drehung des Stützelementes 42 um die Drehachse D um 180°, wodurch der in Fig. 10 gezeigte Zustand erreicht wird. Nach der Drehung erfolgt dann das Einschieben zweiten Formteilkavitätseinsatzes 44 in die Durchführung 51 durch ein Vorschieben der tragenden Mimik entlang der Längsverschiebeachse L. Dies ist in Fig. 11 dargestellt, wobei hier sowohl in Teil (a) als auch in Teil (b) der Figur der Raum 3 erkennbar ist, der durch das Einschieben des zweiten Formteilkavitätseinsatzes 44 innerhalb der Formteilkavität entsteht zwischen dem Kunststoffteil 1 des ersten Spritzgangs und der Oberflächenkontur des zweiten Formteilkavitätseinsatzes 44. Dieser Raum 3 kann dann beispielsweise mit einer zweiten Kunststoffkomponente ausgespritzt werden, bevor das Werkzeug schließlich geöffnet und das fertige Zweikomponenten-Kunststoffteil entformt wird.

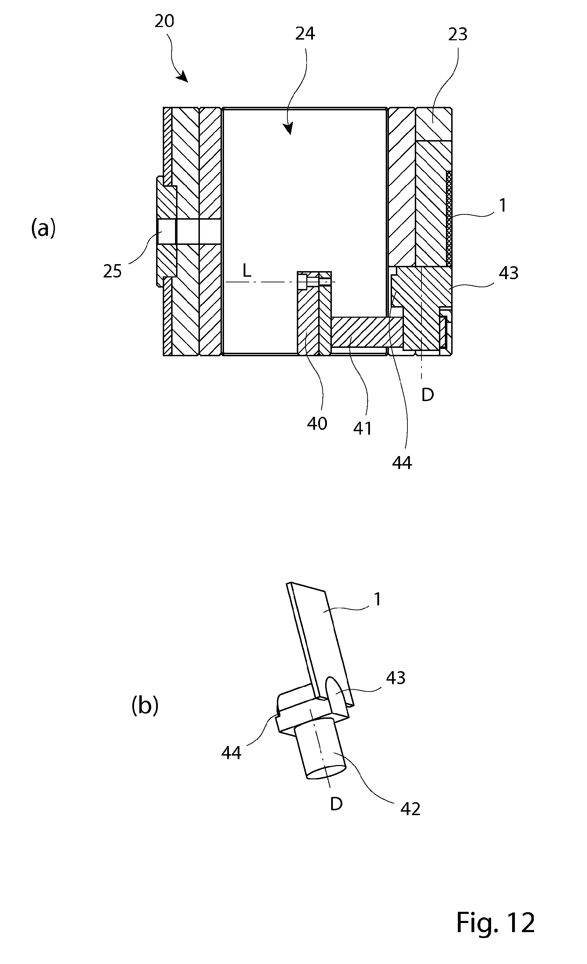

Die Figuren 12 bis 15 zeigen eine weitere Ausführungsform eines erfindungsgemäßen Werkzeugs, wobei der dargestellte Prozeß des Auswechselns des ersten Formteilkavitätseinsatzes 43 gegen den zweiten Formteilkavitätseinsatz 44 entsprechend gezeigt ist und deshalb keiner weiteren Erläuterung bedarf.

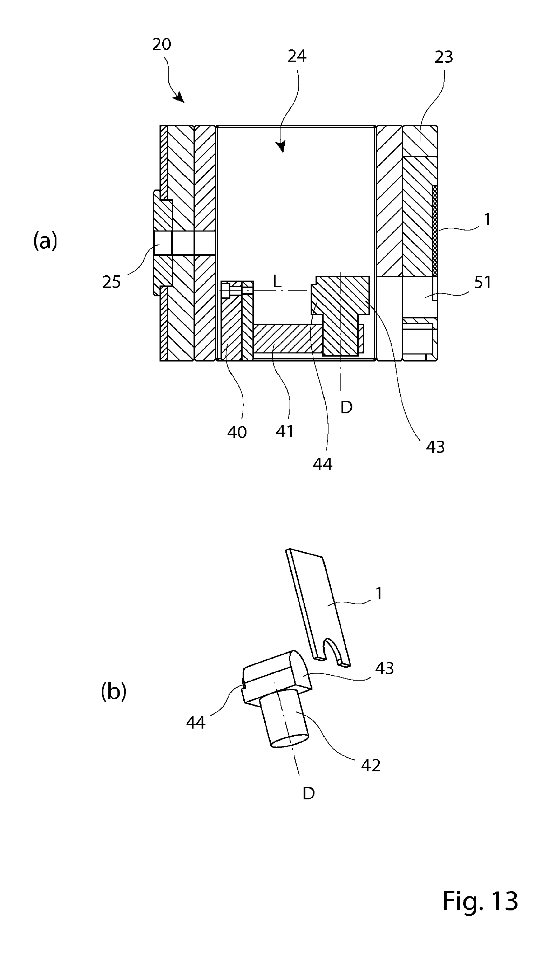

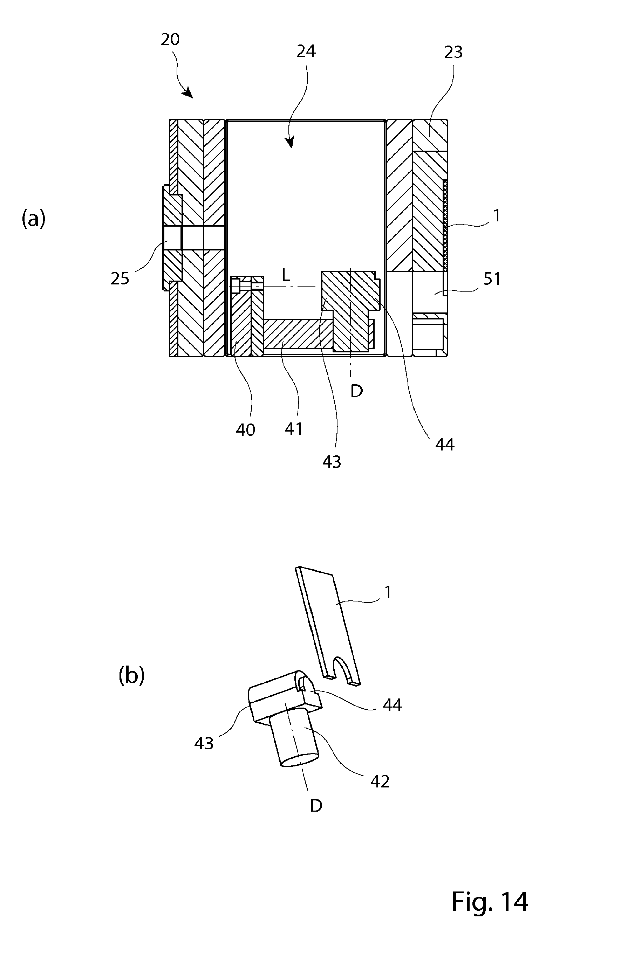

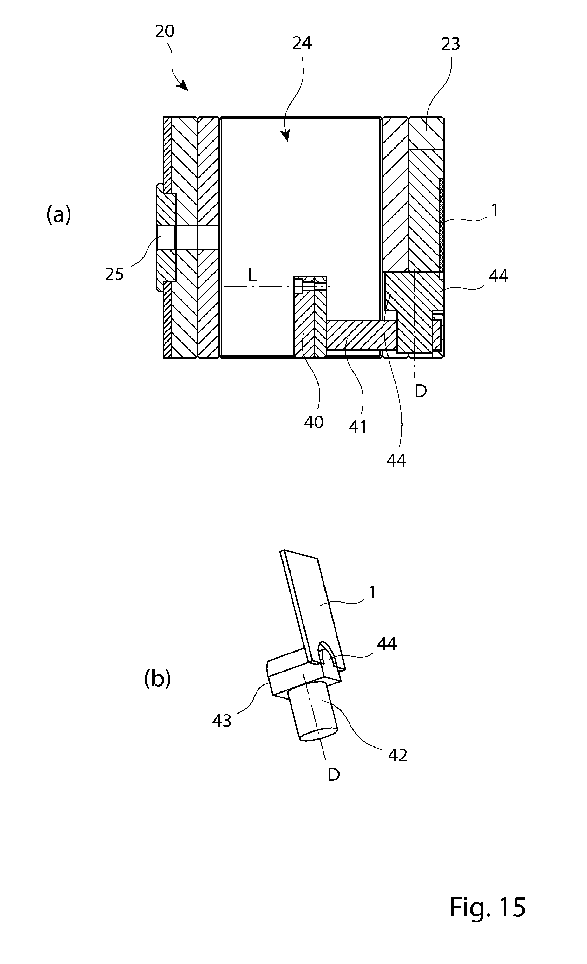

In Bezug auf die Figuren 12 bis 15 ist allerdings anzumerken, daß hier die Formteilkavitätseinsätze 43, 44 an den Enden eines T-förmigen Stützelements 42 angeordnet sind und dessen Lage bezüglich der Maschinenachse senkrecht ist. Das wiederum mittels eines Rotationsaggregats 41 an einer Tragplatte 40 angeordnete T-förmige Stützelement 42 wird in (in der Zeichenebene) aufrechter Position durch ein - nicht gezeigtes - Linearverschiebungsaggregat parallel zur Längsverschiebeachse L aus dem Werkzeug ausgerückt um die Achse D um 180° rotiert (Figuren 13 und 14). Hiernach erfolgt ein Einschieben des T-förmigen Stützelements 42 in entgegengesetzter Richtung und damit, ähnlich wie im Falle der Fig. 11 die Ausbildung eines Raums 3, welcher mittels einer weiteren Kunststoffkomponente ausgespritzt werden kann(Fig. 15).

Das Wechseln der Formteilkavitätseinsätze 43, 44 kann auch im Falle der Figuren 12 bis 15 bei geschlossenem Werkzeug erfolgen, wodurch die Gesamtprozeßzeit bei der Herstellung von Zweikomponenten-Kunststoffteilen gegenüber einem Umsetzen deutlich verkürzt werden kann und gleichzeitig die Nachteile der Verwendung von Sperrschiebern vermieden werden.

## Patentansprüche

1. Werkzeug für Spritzgußmaschinen, aufweisend einen auswerferseitigen Werkzeugaufbau (20), wobei der auswerferseitige Werkzeugaufbau (20) an seiner zur Düsenseite weisenden Oberfläche wenigstens eine Oberflächenkontur aufweist die so ausgeführt ist, daß sie bei geschlossenem Werkzeug zur Ausbildung einer Formteilkavität (50) beiträgt, und wobei diese Formteilkavität (50) in wenigstens einem Spritzgang mit Kunststoffschmelze ausspritzbar ist, um hierdurch ein Kunststofformteil (1) herzustellen,
**dadurch gekennzeichnet, daß**
der auswerferseitige Werkzeugaufbau (20) im Bereich der Formteilkavität (50) wenigstens eine Durchführung (51) aufweist, die in einen Freiraum für Antriebselemente (24) des auswerferseitigen Werkzeugaufbaus führt, und
mehrere Formteilkavitätseinsätze (43, 44) mit verschiedenen Oberflächenkonturen vorgesehen sind, wobei die Formteilkavitätseinsätze (43, 44) so ausgeführt sind, daß wenigstens jeweils ein Formteilkavitätseinsatz (43, 44) durch die Durchführung (51) hindurch in den Innenbereich des Werkzeugs einschiebbar ist, und
bei eingeschobenem Formteilkavitätseinsatz dessen Oberflächenkontur Bestandteil der die Formteilkavität (50) bildenden Oberflächenkontur des auswerferseitigen Werkzeugaufbaus (20) wird.

2. Werkzeug für Spritzgußmaschinen gemäß Anspruch 1,
**dadurch gekennzeichnet, daß**
zwischen verschiedenen Spritzgängen ein automatischer Wechsel wenigstens eines Formteilkavitätseinsatzes (43, 44) durchführbar ist, wodurch eine geometrische Veränderung der Oberflächenkontur der Formteilkavität (50) erzielt wird.

3. Werkzeug für Spritzgußmaschinen gemäß Anspruch 2,
**dadurch gekennzeichnet, daß**
der Wechsel wenigstens eines Formteilkavitätseinsatzes (43, 44) durch ein im wesentlichen lineares Ausrücken des Formteilkavitätseinsatzes entlang der Durchführung (51) erfolgt, das Selektieren eines anderen Formteilkavitätseinsatzes (44, 43) und das im wesentlichen lineare Einschieben des anderen Formteilkavitätseinsatzes (44, 43) entlang der Durchführung (51), wobei die Durchführung (51) vorzugsweise parallel zur Maschinenachse verlaufend angeordnet ist.

4. Werkzeug für Spritzgußmaschinen gemäß einem der Ansprüche 1 bis 3,
**dadurch gekennzeichnet, daß**
die Formteilkavitätseinsätze (43, 44) an einem Stützelement (42) angeordnet sind.

5. Werkzeug für Spritzgußmaschinen gemäß Anspruch 4,
**dadurch gekennzeichnet, daß**
das Stützelement (42) stabförmig, U-, T- oder V-förmig, quadratisch, würfelförmig oder anderweitig polygonförmig ausgeführt ist.

6. Werkzeug für Spritzgußmaschinen gemäß Anspruch 4 oder 5,
**dadurch gekennzeichnet, daß**
zum Selektieren eines Formteilkavitätseinsatzes (43, 44) das Stützelement (42) um eine Hauptsymmetrieachse (D) rotierbar ist.

7. Werkzeug für Spritzgußmaschinen gemäß einem der Ansprüche 4 bis 6,
**dadurch gekennzeichnet, daß**
das Ausrücken oder das Einschieben wenigstens eines Formteilkavitätseinsatzes (43, 44) durch eine Translationsbewegung des Stützelements (42) entlang einer im wesentlichen parallel zur Maschinenachse verlaufenden Achse (L) erfolgt.

8. Werkzeug für Spritzgußmaschinen gemäß einem der vorhergehenden Ansprüche,
**dadurch gekennzeichnet, daß**
das Ausrücken, Selektieren und/oder Einschieben wenigstens eines Formteilkavitätseinsatzes (43, 44) bei geschlossenem Werkzeug durchführbar ist.

9. Werkzeug für Spritzgußmaschinen gemäß einem der vorhergehenden Ansprüche,
**dadurch gekennzeichnet, daß**
die Oberflächenkonturen der Formteilkavitätseinsätze (43, 44) jeweils die Formteilgeometrien der aufeinander folgenden Spritzgänge eines Mehrkomponentenspritzgußprozesses begrenzen.

10. Werkzeug für Spritzgußmaschinen gemäß einem der vorhergehenden Ansprüche,
**dadurch gekennzeichnet, daß**
der auswerferseitige Werkzeugaufbau (20) eine Aufspannplatte (21) aufweist und eine hierzu parallel angeordnete Formteilplatte (23) in welcher zumindest ein Teil der die Formteilkavität (50) bildenden auswerferseitigen Oberflächenkontur ausgebildet ist, wobei Aufspannplatte (21) und Formteilplatte (23) durch wenigstens ein Distanzelement (22) voneinander beabstandet zueinander fest gehalten werden, so daß zwischen Aufspann- und Formteilplatte der Freiraum für Antriebselemente (24) gebildet wird.

11. Werkzeug für Spritzgußmaschinen gemäß Anspruch 10,
**dadurch gekennzeichnet, daß**
im Freiraum für Antriebselemente (24) Rotations- und/oder Linearverschiebungsaggregate angeordnet sind, durch die der Antrieb der Formteilkavitätseinsätze (43, 44) beim Ausrücken, Selektieren und/oder Einschieben derselben erfolgt.

12. Werkzeug für Spritzgußmaschinen gemäß einem der vorhergehenden Ansprüche,
**dadurch gekennzeichnet, daß**
das Ausrücken, Selektieren und/oder Einschieben wenigstens eines Formteilkavitätseinsatzes (43, 44) automatisiert und durch eine Rechnereinrichtung gesteuert erfolgt, so daß bedarfsweise jeder Spritzgang mit einer vom jeweils vorherigen Spritzgang verschiedenen Formteilkavität (50) erfolgt.

13. Verwendung eines Werkzeugs für Spritzgußmaschinen gemäß einem der Ansprüche 1 bis 11 in einem Mehrkomponentenspritzgußprozeß, wobei zwischen den Spritzgängen wenigstens ein Wechsel wenigstens eines Formteilkavitätseinsatzes (43, 44) bei geschlossenem Werkzeug erfolgt.

14. Verwendung eines Werkzeugs für Spritzgußmaschinen gemäß einem der Ansprüche 1 bis 11 zur Herstellung von Spritzgußteilen mit teilweise verschiedenen Formteilgeometrien.
